# EUROPEAN PATENT SPECIFICATION

(11) **EP 1 060 828 B1**
(45) Date of publication and mention of the grant of the patent: **11.10.2006**
(21) Application number: 00112639.0
(22) Date of filing: 15.06.2000
(51) Int. Cl.: B23P 19/04, B23P 21/00, E05B 3/06

(54) **Machine with automatic assembling station for the installation of handles**
Vorrichtung mit automatischer Montagestation zum Zusammenbauen von Griffen
Dispositif avec station d' assemblage automatique pour assembler des poignées

(30) Priority: 18.06.1999 IT PD990131
(43) Date of publication of application: 20.12.2000
(73) Proprietor: Mei s.r.l., 24030 Presezzo (BG) (IT)
(72) Inventor: Sonzogni, Stefano, 24030 Presezzo (BG) (IT)
(74) Representative: Gustorf, Gerhard

(56) References cited:
- GB-A- 834 118
- GB-A- 2 304 789
- US-A- 4 967 471
- US-A- 5 732 578

## Description

The present invention concerns the field of door handle production and assembly and in particular it concerns a station for the assembly of the various components of handles.

Door handles with returning action comprise various components: the handle, the plate, the spiral return spring, an excursion cam, a washer and a snap ring.

At present all these parts are assembled manually by a person who positions the handle on a locking support and puts together the several parts by means of various tools.

This manual assembly mainly results in a clear worsening of the handle quality: in fact, the grip is clamped in a nylon or rubber vice, with a high risk of damaging the part that is most delicate and on view.

Furthermore, the use of traditional systems involves a considerable waste of time and imprecise assembly.

In order to overcome all the drawbacks mentioned above, a new machine for the installation of handles has been designed and implemented, which is provided with an automatic station for the assembly of the various components of handles, according to claim 1.

A method of handle assembling according to claim 7 is also provided.

The new handle assembling station is basically constituted by an expanding-inserting means.

The expanding-inserting means comprises some automatic movements, lever systems and similar devices suitable to receive the various parts constituting the handle and assemble them.

The various components of the expanding-inserting means are the following: a square traction pin, a spring preloader, a cam centering device, a snap ring opener.

The square traction pin has square section and is similar to, but with section slightly smaller than that of the classic square pin used to connect the two handles on the door sides, and is longitudinally divided in two portions that are opened by a conical pin that is coaxial with the square pin.

Said square traction pin expands sidewards and also travels vertically downwards with respect to the rest of the expanding-inserting means.

The spring preloader is an element consisting of two parts, concentric with the square traction pin. One of the two parts of the preloader is fixed and houses the central end of the spring, while the other part houses the outer end of the spring and rotates round the square traction pin.

Also the cam centering device is concentric with the square traction pin, rotates round it and is provided with seats and grooves to position the cam in predefined positions.

The snap ring opener comprises four sectors that are concentric with the plate and are expanded in order to deform the snap ring and permit its assembly.

All the various parts of the expanding-inserting means are operated by hydraulic, electric or pneumatic mechanisms controlled by a processor that synchronizes and times the operations of each part of the expanding-inserting means.

The expanding-inserting means works as follows: the operator inserts the snap ring, the cam and the spring in the given order, then gives the expanding-inserting means the command to prepare the components inserted for the assembly. The snap ring opener opens the ring, the cam centering device positions the cam as required, while the spring preloader brings the central end of the spring to the correct position and rotates the outer end of the spring, preloading the spring itself until it is coupled to a pin provided on the plate.

At this point the operator inserts the plate or the washer and positions the handle on the square traction pin.

Successively, the expanding-inserting means starts operating to assemble all the handle components. The central conical pin opens the square traction pin that is fixed to the handle; immediately afterwards the pin is lowered to introduce the handle through the plate until it is inserted in the central end of the spring, in the excursion cam and in the snap ring. If the square pin is not lowered, but instead the other parts of the expanding-inserting means are lifted to bring the handle components to the level of the handle itself, the result will be the same.

Finally, the snap ring is released, so that it gets into the apposite groove provided on the handle and holds the plate, the spring and the cam onto the handle.

It is preferable to insert the various parts in the expanding-inserting means through servomechanisms or guides that take the single parts (plate, spring, cam, snap ring) from appropriate containers (vibrators) and position them on the expanding-inserting means.

For this purpose, a system of cameras or sensors locates the position and the direction of the components that once installed make the handle right or left, thus permitting the automatic assembly of finished pairs of handles (right and left handle).

The expanding-inserting means constituted as described above, with the relevant mechanisms, can be singularly installed on a workbench provided with containers from which the operator takes the various parts, or on a bench with containers and servomechanisms for the automatic assembly of the handles controlled by a robot with four programmable axes.

To speed up the process, it is possible to install a series of expanding-inserting means in sequence, for example on a rotary table or on a system of free pallets fed by a set of vibrators and servomechanisms, assisted by cameras and sensors, so that while an expanding-inserting means is assembling the various parts of the handle, at the same time each expander of the table (up to 8) receives a component to be installed according to its position.

The precision obtained in this way is considerable, since all the parts of the expanding-inserting means are set for the correct positioning and assembly of the various parts.

The production speed increases, too, since in the last cases described all the operations are simultaneous, automatized and controlled by cameras, sensors and servomechanisms.

The following is just an example among many of the invention in question, illustrated in the enclosed drawings, wherein:

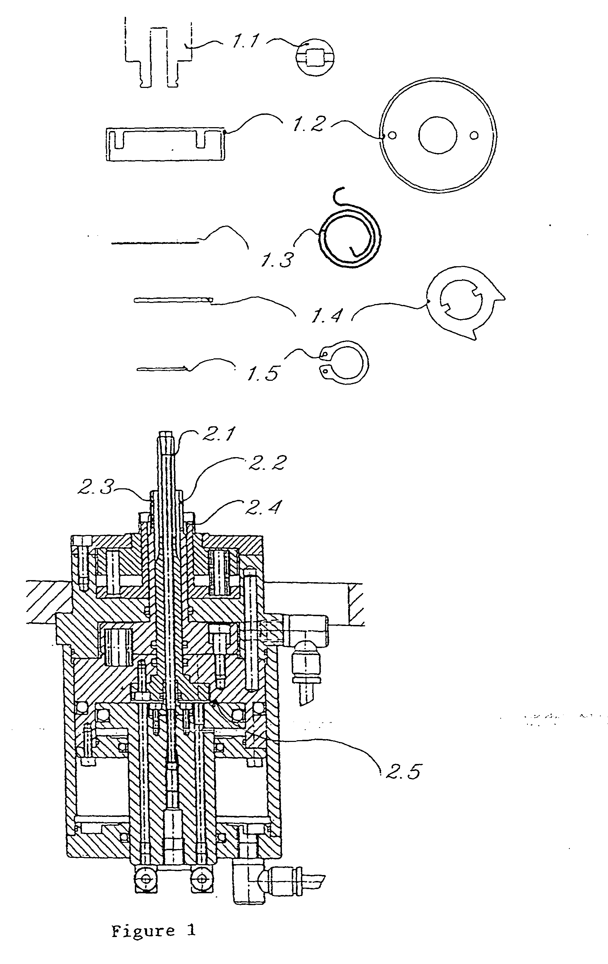

- Figure 1 shows a vertical section of the expanding-inserting means and of the various parts of the handle.
   With regard to the handle, it is possible to observe the handle itself (1.1), the plate (1.2), the spiral spring (1.3), the cam (1.4) and the snap ring (1.5), while with regard to the expanding-inserting means it is possible to observe the square traction pin (2.1), the spring preloader (2.2), the cam centering device (2.3), the snap ring opener (2.4) and the operating mechanisms (2.5).

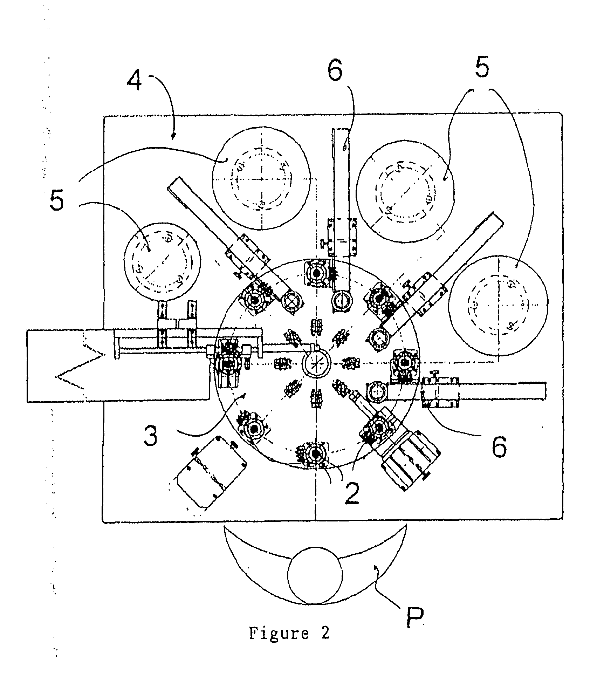

- Figure 2 is an example of assembly of a series of expanding-inserting means (2) on a rotary table (3) of a bench (4) provided with containers (5) and servomechanisms for the insertion of the various parts of the handle (1) in the expanding-inserting means (2). A single person (P) can thus supervise the operation of the equipment and production can be increased while guaranteeing considerable precision.

Therefore, with reference to the above description and the enclosed drawings, the following claims are put forth, defining the scope of the invention.

## Claims

1. Handle assembly station with means (2) for expanding and inserting the various components of returning-action door handles including the handle a plate, a spiral return spring, an excursion can and a snap ring, comprising:
- a traction pin (2.1) having a square section on which the handle (1.1) is positioned,
- a preloading element (2.2) for tensioning said spiral return spring (1.3),
- a centering device (2.3) bringing said excursion cam (1.4) into its centered position,
- an expanding element (2.4) for opening said snap ring (1.5).

2. Handle assembly station according to claim 1, **characterized in that** said traction pin (2.1) has a square section similar to, but with a section slightly smaller than that of the classic square pin for handles (1.1) and is longitudinally divided in at least two portions to be opened by a conical pin that is coaxial with said traction pin (2.1) and wherein said traction pin (2.1) expands sidewards and also travels vertically downwards with respect to the rest of the expanding-inserting means (2).

3. Handle assembly station according to claim 1 or 2, **characterized in that** the spring preloading element (2.2) is divided in two parts concentric with said square traction pin (2.1), wherein one of the two parts of the preloading element (2.2) is fixed and houses the central end of the spiral spring (1.3), while the other part houses the outer end of said spring (1.3) and rotates round the square traction pin (2.1).

4. Handle assembly station according to any of the preceding claims, **characterized in that** the cam centering device (2.3) is concentric with the square traction pin (2.1) and is provided with seats and grooves for the positioning of the cam (1.4) in predefined positions.

5. Handle assembly station according to any of the preceding claims, **characterized in that** the snap ring opener (2.4) is concentric with the square traction pin (2.1) and comprises four sectors that are concentric with said square traction pin (2.1) and suitable for receiving and opening the ends of the snap ring (1.5).

6. Handle assembly station according to any of the preceding claims, **characterized in that** the various parts of the expanding-inserting means (2) are operated by hydraulic, electric or pneumatic mechanisms controlled by a processor that synchronizes and times the operations of each part of the expanding-inserting means (2).

7. Method of assembling handles using a handle assembly station according to any of the preceding claims, **characterized in that** the process comprises the following steps: the snap ring opener (2.4) opens the ring (1.5), the cam centering device (2.3) positions the cam (1.4) as required, while the spring preloader (2.2) brings the central end of the spiral spring (1.3) to the correct position and rotates the outer end of the spring (1.3), thus preloading the spring (1.3) until it is coupled to a pin provided on a plate (1.2), the expanding-inserting means (2) starts operating with the central conical pin opening the square traction pin (2.1), immediately afterwards the pin is lowered to introduce the handle (1.1) through the plate (1.2) until it is inserted in the central end of the spring (1.3), in the excursion cam (1.4) and in the snap ring (1.5), and finally the snap ring (1.5) is released, so that it gets into an apposite groove provided on the handle (1.1) and holds the plate (1.2), the spring (1.3) and the cam (1.4) onto the handle (1.1).

## Patentansprüche

1. Montagestation für Türgriffe mit Mitteln (2) zum Aufweiten und Einsetzen der einzelnen Bauteile für die Rückholbewegung von Türgriffen, bestehend aus dem Handgriff, einer Scheibe, einer Rückhol-Spiralfeder, einem Anschlagnocken und einem Schnappring, umfassend:
- einen Zugbolzen (2.1) mit quadratischem Querschnitt, auf den der Griff (1.1) aufsetzbar ist,
- ein Vorspannelement (2.2) zum Spannen der Rückhol-Spiralfeder (1.3),
- eine Zentriereinrichtung (2.3), die den Anschlagnocken (1.4) in seine zentrierte Stellung bringt,
- ein Aufweitelement (2.4) zum Öffnen des Schnapprings (1.5).

2. Montagestation nach Anspruch 1, **dadurch gekennzeichnet, daß** der Zugbolzen (2.1) einen quadratischen Querschnitt hat, der ähnlich wie bei einem herkömmlichen Vierkant für Türgriffe (1.1), jedoch etwas kleiner als dieser ausgebildet ist und der in Längsrichtung in wenigstens zwei Abschnitte unterteilt ist, die mittels eines konischen, zu dem Zugbolzen (2.1) koaxialen Stiftes geöffnet werden können, wobei der Zugbolzen (2.1) sich seitwärts aufweitet und sich außerdem relativ zu dem Rest des Aufweit- und Einsetzmittel (2) vertikal nach unten verschiebt.

3. Montagestation nach Anspruch 1 oder 2, **dadurch gekennzeichnet, daß** das Vorspannelement (2.2) für die Feder in zwei zu dem Zugbolzen (2.1) konzentrische Teile unterteilt ist, wobei eines der beiden Teile des Vorspannelements (2.2) fest ist und das mittige Ende der Spiralfeder (1.3) aufnimmt, während der andere Teil das äußere Ende der Feder (1.3) aufnimmt und um den Zugbolzen (2.1) mit quadratischem Querschnitt drehbar ist.

4. Montagestation nach einem der vorhergehenden Ansprüche, **dadurch gekennzeichnet, daß** die Zentriereinrichtung (2.3) für den Anschlagnocken konzentrisch zu dem Zugbolzen (2.1) mit quadratischem Querschnitt angeordnet ist und Sitze sowie Nuten zur Positionierung des Anschlagnockens (1.4) in vorbestimmten Stellungen aufweist.

5. Montagestation nach einem der vorhergehenden Ansprüche, **dadurch gekennzeichnet, daß** das Aufweitelement (2.4) für den Schnappring konzentrisch zu dem Zugbolzen (2.1) mit quadratischem Querschnitt angeordnet ist und für die Aufnahme und Öffnung der Enden des Schnappringes (1.5) vier Sektoren hat, die konzentrisch zu dem Zugbolzen (2.1) mit quadratischem Querschnitt angeordnet sind.

6. Montagestation nach einem der vorhergehenden Ansprüche, **dadurch gekennzeichnet, daß** die einzelnen Teile der Aufweit- und Einsetzmittel - (2) durch hydraulische, elektrische oder pneumatische Mechanismen betätigt werden, die von einem Prozessor gesteuert sind, der die Eingriffe jedes Teils der Aufweit- und Einsetzmittel (2) synchronisiert und taktet.

7. Verfahren zum Zusammensetzen von Türgriffen unter Verwendung einer Montagestation nach einem der vorhergehenden Ansprüche, **dadurch gekennzeichnet, daß** das Verfahren die folgenden Schritte umfaßt:
Das Aufweitelement (2.4) öffnet den Schnappring (1.5), die Zentriereinrichtung (2.3) bringt den Anschlagnocken (1.4) in die erforderliche Position, während das Vorspannelement (2.2) das mittige Ende der Spiralfeder (1.3) in die richtige Lage bringt und das äußere Ende der Spiralfeder (1.3) dreht, wodurch die Spiralfeder (1.3) vorgespannt wird, bis sie an einem Stift auf einer Scheibe (1.2) einhakt; die Aufweit- und Einsatzmittel (2) werden betätigt, so daß ihr zentraler konischer Stift den Zugbolzen (2.1) mit quadratischem Querschnitt aufweitet; unmittelbar danach wird der Zugbolzen abgesenkt, um den Türgriff (1.1) durch die Scheibe (1.2) zu stecken, bis er in das mittige Ende der Spiralfeder (1.3), in den Anschlagnocken (1.4) und in den Schnappring (1.5) eingreift, worauf schließlich der Schnappring (1.5) freigegeben wird, so daß er in eine entsprechende Nut des Türgriffs (1.1) eingreift und **dadurch** die Scheibe (1.2), die Spiralfeder (1.3) und den Anschlagnocken (1.4) am Türgriff (1.1) festhält.

## Revendications

1. Station de montage pour poignées de porte avec des moyens (2) pour écarter et insérer les divers composants pour le mouvement de retour des poignées, comprenant la poignée elle-même, un disque, un ressort spiral de retour, une came de butée et un circlip, ladite station comprenant :
- une tige de traction (2.1) à section carrée sur laquelle la poignée (1.1) peut-être enfichée,
- un élément de précontrainte (2.2) pour tendre le ressort spiral (1.3),
- un dispositif de centrage (2.3) apte à porter la came de butée (1.4) dans sa position centrale,
- un élément d'écartement (2.4) pour ouvrir le circlip (1.5) .

2. Station de montage selon la revendication 1, **caractérisée par le fait que** la tige de traction (2.1) présente une section carrée de forme usuelle mais plus petite qu'un carré de poignée ordinaire (1.1), ladite tige étant fendue longitudinalement en au moins deux parties aptes à être écartées au moyen d'une clavette conique coaxiale à la tige de traction (2.1), de sorte que ladite tige de traction (2.1) s'écarte latéralement et en outre se déplace verticalement vers le bas relativement au reste des moyens d'écartement et d'insertion (2).

3. Station de montage selon la revendication 1 ou 2, **caractérisée par le fait que** l'élément de précontrainte (2.2) pour le ressort est divisé en deux parties concentriques à la tige de traction (2.1), l'une des deux parties de l'élément de précontrainte étant fixe et apte à recevoir l'extrémité intérieure du ressort spiral (1.3), tandis que l'autre partie est apte à recevoir l'extrémité extérieure du ressort (1.3) et pivote autour de la tige de traction (2.1) à section carrée.

4. Station de montage selon une des revendications précédentes, **caractérisée par le fait que** le dispositif de centrage (2.3) pour la came de butée est concentrique à la tige de traction (2.1) à section carrée et présente des logements et des cannelures pour le positionnement de la came de butée (1.4) dans des positions prédéterminées.

5. Station de montage selon une des revendications précédentes, **caractérisée par le fait que** l'élément d'écartement (2.4) pour le circlip est concentrique à la tige de traction (2.1) à section carrée et présente quatre secteurs pour recevoir et écarter les extrémités du circlip (1.5) lesdits secteurs étant concentriques à la tige de traction (2.1) à section carrée.

6. Station de montage selon une des revendications précédentes, **caractérisée par le fait que** les différents éléments desdits moyens d'écartement et d'insertion (2) sont actionnés par des mécanismes hydrauliques, électriques ou pneumatiques commandés par un processeur pour synchroniser et cadencer l'action de chaque élément desdits moyens d'écartement et d'insertion (2).

7. Procédé pour monter des poignées de porte en utilisant une station de montage selon une des revendications précédentes, **caractérisé par** les opérations suivantes :
l'élément d'écartement (2.4) ouvre le circlip (1.5), le dispositif de centrage (2.3) porte la came de butée (1.4) à la position voulue tandis que l'élément de précontrainte (2.2) porte l'extrémité intérieure du ressort spiral (1.3) à la position correcte et fait tourner l'extrémité extérieure du ressort spiral (1.3), ce qui tend le ressort spiral (1.3) jusqu'à ce qu'il s'enclenche sur un ergot en saillie sur un disque (1.2) ; lesdits moyens d'écartement et
d'insertion (2) sont actionnés de telle sorte que leur clavette conique centrale écarte la tige de traction (2.1) à section carrée ; immédiatement après, la tige de traction est abaissée pour faire passer la poignée (1.1) à travers le disque (1.2) jusqu' à ce qu'elle s'engage dans l'extrémité intérieure du ressort spiral (1.3), dans la came de butée (1.4) et dans le circlip (1.5), ledit circlip (1.5) est alors libéré de sorte qu'il s'engage dans une des rainures de la poignée (1.2) et maintient ainsi le disque (1.2), le ressort spiral (1.3) et la came de butée (1.4) sur la poignée (1.1).
